# EUROPÄISCHE PATENTANMELDUNG

(11) **EP 0 968 748 A2**
(43) Veröffentlichungstag der Anmeldung: **05.01.2000**
(21) Anmeldenummer: 99103527.0
(22) Anmeldetag: 24.02.1999
(51) Int. Cl.: B01D 53/14, C10K 1/08

(54) **Verfahren zur Rückgewinnung von Gasen**

(30) Priorität: 01.07.1998 DE 19829389
(71) Anmelder: Krupp Uhde GmbH, 44141 Dortmund (DE)
(72) Erfinder: Menzel, Johannes, 46045 Oberhausen (DE)
(74) Vertreter: Albrecht, Rainer Harald, Dr.-Ing.

(57) **Zusammenfassung**

Die Erfindung betrifft ein Verfahren zur Rückgewinnung von Gasen, z.B. Methan, höhere Kohlenwasserstoffe, H₂ und CO, die in einer Absorptionskolonne bei der absorptiven Entfernung von Sauergasen aus technischen Gasen in einem Absorptionsmittel coabsorbiert werden. Das die Absorptionskolonne verlassene Absorptionsmittel wird einer Flashstufe zugeführt. Die bei einer Druckabsenkung in der Flashstufe selektiv freigesetzten nutzbaren Gase werden als Wertstoffe in die Absorptionskolonne zurückgeführt. Erfindungsgemäß wird das die Absorptionskolonne verlassende Absorptionsmittel in flüssiger Phase verdichtet und in einem indirekt beheizten Wärmeaustauscher erwärmt. In der Flashstufe wird ein Flashdruck eingestellt, der größer ist als der Betriebsdruck in der Absorptionskolonne. Die Eintrittstemperatur und der Eintrittsdruck des flüssigen Absorptionsmittels bei Eintritt in die Flashstufe werden so eingestellt, daß der größte Teil der im Absorptionsmittel gelösten nutzbaren Gase bei der Entspannung des Absorptionsmittels auf den Flashdruck freigesetzt werden. Die Rückführung der freigesetzten Gase in die Absorptionskolonne erfolgt ohne Zwischenverdichtung nur aufgrund der Druckdifferenz zwischen Flashdruck und Betriebsdruck der Absorptionskolonne.

## Beschreibung

Die Erfindung betrifft ein Verfahren zur Rückgewinnung von coabsorbierten Nutzgasen, die in einer Absorptionskolonne bei der absorptiven Entfernung von Sauergasen aus technischen Gasen in einem Absorptionsmittel coabsorbiert werden, wobei das die Absorptionskolonne verlassende Absorptionsmittel einer Flashstufe zugeführt wird und wobei die bei einer Druckabsenkung in der Flashstufe selektiv freigesetzten coabsorbierten Nutzgase als Wertstoffe in die Absorptionskolonne zurückgeführt werden.

Bei der absorptiven Entfernung von Sauergasen, z.B. H₂S und CO₂, aus technischen Gasen, wie Erdgas und Synthesegas, geht auch ein Teil der nutzbaren Gase wie Methan, höhere Kohlenwasserstoffe, H₂, CO und dergleichen in Lösung. Die Coabsorption von Methan, höheren Kohlenwasserstoffen, H₂ und CO kann zu beachtlichen Verlusten dieser nutzbaren, Wertstoffe darstellenden Gase führen, da diese bei der Absorbensregeneration mit den freigesetzten Sauergasen verloren gehen.

Zur Abtrennung von Sauergasen aus technischen Gasen werden chemische Absorptionsmittel, z.B. Äthanolamine und Alkalisalzlösungen und Absorptionsmittel, welche die Sauergaskomponenten physikalisch binden, z.B. Selexol, Propylencarbonat und Methanol, eingesetzt. Insbesondere die letztgenannten, physikalischen Absorptionsmittel haben ein solches Lösungsmittelverhalten, daß durch Coabsorption beachtliche Mengen an nutzbaren Gasen mit abgeschieden werden. Zur Rückgewinnung der gelösten, nutzbaren Gase wird das die Absorptionskolonne verlassende, mit den aufgenommenen Sauergas- und Gaswertstoffkomponenten angereicherte Lösungsmittel in einer Flashstufe durch Absenkung des Druckes entspannt, wobei die gelösten Gaswertstoffkomponenten selektiv mit der Gasphase freigesetzt werden. Die bei niedrigem Druck freigesetzten Gase werden verdichtet und in die Absorptionskolonne zurückgeführt. Die für die Rückführung der in der Flashstufe freigesetzten Gase erforderlichen Turboverdichteranlagen sind mit einem hohen Investionsaufwand und hohen Betriebskosten verbunden.

Der Erfindung liegt die Aufgabe zugrunde, das eingangs beschriebene Verfahren so weiter zu entwickeln, daß eine Verdichtung der in der Flashstufe freigesetzten Gase nicht erforderlich ist.

Zur Lösung dieser Aufgabe lehrt die Erfindung,
daß das die Absorptionskolonne verlassende Absorptionsmittel in flüssiger Phase verdichtet und in einem indirekt beheizten Wärmeaustauscher erwärmt wird,
daß in der Flashstufe ein Flashdruck eingestellt wird, der größer ist als der Betriebsdruck in der Absorptionskolonne,
wobei die Eintrittstemperatur und der Eintrittsdruck des flüssigen Absorptionsmittels bei Eintritt in die Flashstufe so eingestellt werden, daß der größte Teil der im Absorptionsmittel gelösten nutzbaren Gase bei der Entspannung des Absorptionsmittels auf den Flashdruck freigesetzt werden, und wobei die Rückführung der freigesetzten Gase in die Absorptionskolonne ohne Zwischenverdichtung nur aufgrund der Druckdifferenz zwischen Flashdruck und Betriebsdruck der Absorptionskolonne erfolgt. Die Druckerhöhung vor Eintritt in die Flashstufe beträgt 0,1 bis 10 bar, wobei vorzugsweise mit einer Druckerhöhung von 0,3 bis 3 bar gearbeitet wird. Üblicherweise wird für die Druckerhöhung eine Flüssigkeitspumpe eingesetzt. Wird nur mit einem leicht erhöhten Druck gearbeitet, kann auch eine vorhandene Ablaufhöhe aus der Absorptionskolonne ausgenutzt werden. Die Erwärmung des aus der Absorptionskolonne abgezogenen Absorptionsmittels wird auf die Druckerhöhung so abgestimmt, daß in der nachfolgenden Flashstufe der größte Teil der im Absorbens gelösten nutzbaren Gase bei einem Flashdruck, der etwas höher ist als der Betriebsdruck in der Absorptionskolonne, freigesetzt wird. Die Druckdifferenz zwischen dem Flashdruck und dem Betriebsdruck der Absorptionskolonne wird für die Rückführung der freigesetzten Gase genutzt. Im Vergleich zum Stand der Technik, bei dem Gasverdichter zur Rückführung der freigesetzten Gase eingesetzt werden, ergibt sich eine deutliche Einsparung an Investions- und Betriebskosten. Besonders vorteilhaft ist das erfindungsgemäße Verfahren, wenn die Regenerierung des beladenen Absorbens bei höheren Temperaturen in einer der Flashstufe nachgeschalteten Desorptionskolonne vorgenommen wird.

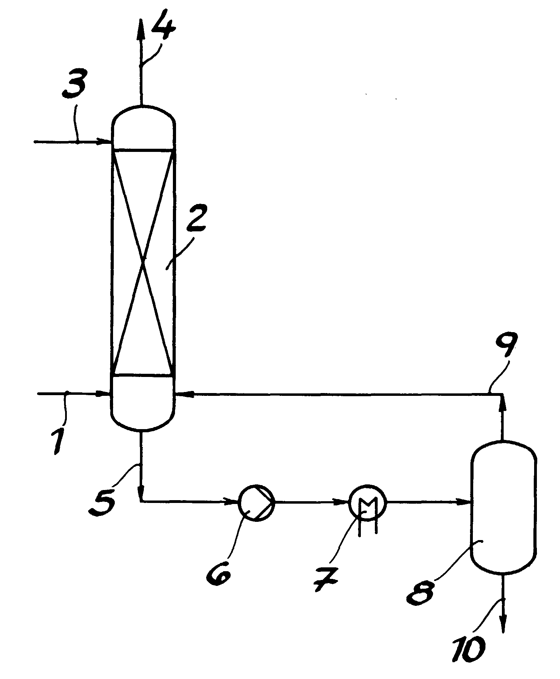

Im folgenden wird die Erfindung anhand einer lediglich ein Ausführungsbeispiel darstellenden Zeichnung erläutert. Die einzige Figur zeigt das Verfahrensschema zur Durchführung des erfindungsgemäßen Verfahrens.

Das in der Figur dargestellte Verfahren dient zur Rückgewinnung von nutzbaren Gasen, insbesondere Methan, höheren Kohlenwasserstoffen, H₂ und CO, die in einer Absorptionskolonne bei der absorptiven Entfernung von Sauergasen, z.B. H₂S und CO₂, aus technischen Gasen in einem Absorptionsmittel coabsorbiert werden. Technische Gase meint z.B. Erdgas und Synthesegas.

Das zu reinigende technische Gas wird in einem Eintrittsgasstrom 1 am Sumpf der Absorptionskolonne 2 zugeführt, wobei die im Eintrittsgasstrom 1 enthaltenen Sauergaskomponenten im Gegenstrom mit einem am Kopf der Absorptionskolonne 2 aufgegebenen Absorptionsmittel 3 entfernt werden. Als Absorptionsmittel 3 eignen sich Lösungsmittel, welche die Sauergaskomponenten chemisch binden, z.B. Äthanolamine und Alkalisalzlösungen, und Absorbentien, welche die Sauergaskomponenten physikalisch binden, z.B. Selexol, Propylencarbonat und Methanol. Das gereinigte Gas 4 wird am Kopf der Absorptionskolonne 2 abgezogen. Das mit Sauergasen beladene Absorptionsmittel 5 wird am Sumpf der Absorptionskolonne 2 abgezogen, mittels einer Pumpe 6 in flüssiger Phase verdichtet und in einem indirekt beheizten Wärmeaustauscher 7 erwärmt. Vorzugsweise erfolgt in der flüssigen Phase eine Druckerhöhung von 0,3 bis 3 bar. Das Absorptionsmittel 5 wird dann einer Flashstufe 8 zugeführt, in der ein Flashdruck eingestellt ist, der größer ist als der Betriebsdruck in der Absorptionskolonne 2. Die Eintrittstemperatur und der Eintrittsdruck des flüssigen Absorptionsmittels 5 werden bei Eintritt in die Flashstufe so eingestellt, daß der größte Teil der im Absorptionsmittel gelösten nutzbaren Gase bei der Entspannung des Absorptionsmittels auf den Flashdruck selektiv freigesetzt werden. Die freigesetzten Gase 9 werden in den Sumpf der Absorptionskolonne 2 zurückgeführt, wobei die Rückführung der freigesetzten Gase 9 ohne Zwischenverdichtung nur aufgrund der Druckdifferenz zwischen dem Flashdruck und dem Betriebsdruck der Absorptionskolonne 2 erfolgt. Der die Flashstufe 8 verlassende, noch mit Sauergasen beladene Absorptionsmittelstrom 10 wird zwecks Regenerierung einer nicht dargestellten Desorptionskolonne zugeführt. Das regenerierte, also von Sauergasen befreite Absorptionsmittel wird dann wieder am Kopf der Absorptionskolonne 2 aufgegeben.

## Patentansprüche

1. Verfahren zur Rückgewinnung von coabsorbierten Nutzgasen, die in einer Absorptionskolonne bei der absorptiven Entfernung von Sauergasen aus technischen Gasen in einem Absorptionsmittel coabsorbiert werden, wobei das die Absorptionskolonne verlassende Absorptionsmittel einer Flashstufe zugeführt wird und wobei die bei einer Druckabsenkung in der Flashstufe selektiv freigesetzten coabsorbierten Nutzgase als Wertstoffe in die Absorptionskolonne zurückgeführt werden**, dadurch gekennzeichnet,**
daß das die Absorptionskolonne verlassende Absorptionsmittel in flüssiger Phase verdichtet und in einem indirekt beheizten Wärmeaustauscher erwärmt wird,
daß in der Flashstufe ein Flashdruck eingestellt wird, der größer ist als der Betriebsdruck in der Absorptionskolonne,
wobei die Eintrittstemperatur und der Eintrittsdruck des flüssigen Absorptionsmittels bei Eintritt in die Flashstufe so eingestellt werden, daß der größte Teil der im Absorptionsmittel gelösten nutzbaren Gase bei der Entspannung des Absorptionsmittels auf den Flashdruck freigesetzt werden, und wobei die Rückführung der freigesetzten Gase in die Absorptionskolonne ohne Zwischenverdichtung nur aufgrund der Druckdifferenz zwischen Flashdruck und Betriebsdruck der Absorptionskolonne erfolgt.

2. Verfahren nach Anspruch 1, dadurch gekennzeichnet, daß der Eintrittsdruck des Absorptionsmittels um 0,3 bis 10 bar größer ist als der Betriebsdruck der Absorptionskolonne.

3. Verfahren nach Anspruch 1 oder 2, dadurch gekennzeichnet, daß die in der Flashstufe freigesetzten Gase dem Sumpf der Absorptionskolonne zugeführt werden.

4. Verfahren nach einem der Ansprüche 1 bis 3, dadurch gekennzeichnet, daß der die Flashstufe verlassende, mit Sauergasen beladene Absorptionsmittelstrom zwecks Regenerierung einer Desorptionskolonne zugeführt wird.
